# EUROPEAN PATENT APPLICATION

(11) **EP 3 731 165 A1**
(43) Date of publication of application: **28.10.2020**
(21) Application number: 20171216.3
(22) Date of filing: 23.04.2020
(51) Int. Cl.: G06Q 20/40, G07F 9/02, G07F 11/36, G07F 11/54, G07F 11/62

(54) **JEWELRY VENDING MACHINE**

(30) Priority: 23.04.2019 IT 201900006236
(71) Applicant: Bulgari S.p.A., 00186 Roma (IT)
(72) Inventor: SCHWARZER, Silvia, 00186 Roma (IT); SAVOINI, Virginia, 00187 Roma (IT)
(74) Representative: De Tullio, Michele Elio

(57) **Abstract**

The present invention refers to a jewelry vending machine for jewels such as, for instance, rings, bracelets, and necklaces, comprising a plurality of containers, each of them being suitable for housing at least one of such jewels. A user is able to select the appropriate jewel on the basis of a biometric scanning of his/her hands and of the following displaying on a screen of the image of the scanned hand, associated with the selected jewel having the appropriate dimensions for the user. The special configuration of the containers inside which the jewels to be selected are arranged allows to have at his/her disposal a wide variety of models for the choice.

The selection and potential purchase procedure is thus made simple, quick, and effective.

## Description

### Field of the invention

The present invention refers to a jewelry vending machine. In particular, the present invention refers to a rings, bracelets, and necklaces vending machine comprising special jewel containers and handling mechanisms to take full advantage of available spaces. Also, the vending machine according to the present invention efficiently put in relation rings, bracelets available in said containers with dimensions and shape of the user's fingers and wrists, in order to verify the aesthetic aspect when they are worn by the user, prior to a possible purchase.

### Present status of the art

Devices or systems are known in the status of the art that facilitate the interaction between purchaser and accessory vending machine for the accessory purchasing.

For instance, Chinese patent application published under no. CN 106781006 provides a self-service jewelry selling method comprising the step wherein, after the user has selected a jewelry piece by way of a panel, the system shows information and images about the selected jewel. Then, the user can purchase, through an immediate payment, and obtain through the system the selected object.

However, in such system, the user purchases the object without first verifying if the object actually fits the dimensions and shapes of his/her own body.

Chinese patent application published under no. CN 103956000 describes a system comprising a vending machine for accessories, in particular rings, wherein the system is also able to collect information about user's hands, wrist, and in particular fingers so as to create a corresponding data base of information. The customer can in this way select the ring that best suits the dimensions of his/her own fingers.

However, in such patent application, the data relevant to the part of user's body are inserted in the system in a traditional manner, for instance by a keyboard or a video camera which captures the whole body. As a result, it is not possible to input detailed data in order to establish if there is an exact correspondence between user and accessory to be purchased.

In addition, in the devices known in the art, the jewelry vending machines for jewels which can be purchased by a user are scarcely functional, in that, due to the lack of space, inside the special containers present in the vending machine just a reduced quantity of jewels can be inserted.

As a result, the user has a limited chance of choosing models and/or sizes between the jewels that are available and consequently in most cases the user is obliged to renounce to purchase the object as he/she is unsatisfied with the characteristics of the limited jewels therein available.

Therefore, the applicant of the present patent application has identified the need for providing a jewelry vending machine capable of taking full advantage of the available spaces so as to make it possible for a user to view a wide variety of models and sizes.

### Summary of the invention

In a first aspect, the present invention refers to a jewelry vending machine such as that claimed in claim 1.

As a matter of fact, the applicant of the present application has surprisingly identified that the above-mentioned technical problem can be effectively and reliably solved by way of a jewelry vending machine for jewels such as, for instance rings, bracelets, and necklaces, formed of at least one first module comprising: a) a computer file containing images, information, and data relevant to said jewels; b) a first screen able to show said images, information, and data relevant to said jewels; c) a plurality of containers, each of them being suitable for housing at least one of said jewels, subdivided as a function of their type and dimensions; d) a device that makes it possible for a user to select at least one of said jewels; e) first handling means suitable for taking out the container wherein the selected jewel is contained and suitable for subsequently distributing it to the user; and f) managing means for managing said first means for handling the container wherein the selected jewel is contained, characterized in that at least one of said plurality of containers suitable for housing said jewels is contained in at least a rotary basket provided with a central pivot, a lower base plate and a plurality of substantially cylindric shaped compartments radially arranged around said central pivot and supported by said lower base plate, wherein each of said substantially cylindric shaped compartments is suitable for housing a plurality of said jewelry containers that are vertically arranged, overlapped on one another.

In this way, the special configuration of the jewel containers in the vending machine according to the present invention allows to take full advantage of the available spaces and consequently to have at disposal a high number of articles amongst which the user can possibly select which one to purchase.

In accordance with a preferred embodiment, each basket is also provided with an upper plate.

In accordance with one preferred embodiment, the jewelry vending machine according to the present invention comprises a plurality of said baskets overlapped on one another, so that said upper plate and said lower base plate of each basket separate that basket from that arranged above and from that arranged below, respectively.

With such overlapped basket configuration, the space available for housing jewels inside the compartments present in the baskets is thus further increased.

In accordance with one preferred embodiment, said device, which makes it possible for a user to select at least one of said jewels, comprises a biometric scanning system capable of automatically determining the diameter and the length of the fingers of a hand and/or of the wrist of a user.

In this way, the vending machine according to the present invention is provided with a virtual test room wherein it is possible scan a user's hand, by way of a special equipment.

In this way, the representation of the scanned hand, having the same dimensions as the real one, is displayed on the screen.

In accordance with one preferred embodiment, the vending machine according to the present invention also comprises a system capable of comparing said data determined by biometric scanning with said data, available in said computer data file, relevant to the jewels.

In this way, in addition to the scanned hand, a jewel is also shown on the screen selected amongst those available in the computer file, having dimensions appropriate to be worn by the user's hand, visible on the screen in real time. Also, a hand rotation by the user performed in front the screen induces a rotation of the hand representation on the screen itself; the user, by closing his/her hand in a fist, makes it possible for the ring to be placed in another finger.

It is in this way allowed for a user to perform a virtual test of rings by using significantly increased reality technologies.

In accordance with one further preferred embodiment, at least another of said container suitable for containing free gifts internally thereof is formed of a spiral device such as that present in typical tuck, snack, and similar vending machines.

In this way, said objects can be arranged along a curvilinear line which extends around the spiral shaped container.

In accordance with one preferred embodiment, the jewelry vending machine according to the present invention comprises a plurality of trays overlapped on one another, wherein each tray is capable of housing a plurality of said spiral devices, arranged side by side internally to each tray.

In this way, the space inside the trays is further optimally exploited in order to increase the number of available objects in the vending machine according to the present invention.

In accordance with one preferred embodiment, the jewelry vending machine according to the present invention comprises at least one first portion formed of a plurality of said baskets overlapped on one another and at least one second portion formed of a plurality of said trays overlapped on one another, operatively connected to each other.

In accordance with one preferred embodiment, said handling means are implemented in such a way as to improve the product distribution speed in order to consequently obtain a better selling efficiency.

In accordance with one preferred embodiment, the jewelry vending machine according to the present invention also comprises, in addition to said first module, a second module comprising some of the same elements of said first module, i.e. said computer file containing images, information, and data relevant to said jewels of the first module and said plurality of containers suitable for housing said jewels, subdivided as a function of jewelry type and dimensions. In addition, said second module also comprises i) a second screen, different from said first screen of the first module, able to show said images, information, and data relevant to said jewels; and ii) second handling means, different from said first handling means of the first module, suitable for extracting from a corresponding container the jewel selected by the user.

In this way, the jewelry vending machine according to the present invention is provided with two different modules, which can act simultaneously. Each module has its own screen and its own handling means for handling the containers internally to which the jewels selected by the user are housed. In addition, said management means of the handling means allow to independently and in parallel manage said first jewel selecting module and said second jewel selecting module.

The first module, provided with a scanning system for scanning the user's hand as described above and with a virtual test room, makes it possible for the jewel to be selected after a virtual checking of the object wearability on the user's body, whereas the second module, without such scanning system, makes it simultaneously possible to quickly select the product by, for instance, another user.

In accordance with one preferred embodiment, the jewelry vending machine according to the present invention also comprises an alert mechanism capable of automatically emitting a signaling perceivable by a user, should one or more jewels in one of said containers be out of stock.

In this way, a user and/or the personnel in charge of the correct operation of a jewelry vending machine according to the present invention, is notified in real time about the fact that a given object is out of stock, i.e. it is not contained in any of the containers present in the vending machine.

In accordance with one preferred embodiment, said alert mechanism might be of a luminous type such as, for instance, an indicator light that glows, an acoustical or visual type such as, for instance, an alphanumeric wording which appears on the screen.

The out-of-stock product notification will be deactivated afterwards, once new objects of the out-of-stock products will be introduced in the respective containers.

In a second aspect, the present invention refers to a method for automatically distributing jewels such as, for instance, rings, bracelets, and necklaces, contained inside special containers, such as that specified in claim 9.

As a matter of fact, the applicant of the present application has surprisingly realized that the above-identified technical problem can be solved in an effective and reliable manner by means of a method for automatically distributing jewels such as, for instance, rings, bracelets, and necklaces, contained in special containers, the method comprising the following steps:
a) displaying on a panel images, information, and data, available in a computer file, relevant to said jewels;
b) selecting at least one of said jewels displayed on said panel;
c) for each selected jewel, activating a first handling means suitable for extracting the container wherein the selected jewel is housed and for a subsequent conveyance thereof to a delivery zone;
characterized in that at least one of said containers suitable for housing said jewels is formed of at least one rotary basket provided with a central pivot, a lower base plate, and a plurality of substantially cylindric shaped compartments radially arranged around said central pivot and supported by said lower base plate, wherein each of said compartments is suitable for containing a plurality of said jewels arranged vertically, overlapped on one another.

In this way, the special configuration of the jewel containers in the vending machine according to the present invention allows to take full advantage of the available spaces and consequently to have at disposal a high number of articles, amongst which the user can select one for its purchase, if any.

In accordance with one preferred embodiment, in the jewelry vending machine used in the method according to the present invention there is a plurality of said baskets overlapped on one another. In this way, the space used for housing the jewels put at disposal for being selected by the user is further increased.

In accordance with one preferred embodiment, said step of selecting at least one of said jewels is performed on the basis of the information acquired by way of a previous biometric scanning capable of automatically determining the diameter and length of the fingers of a hand and/or of a wrist of a user intended for wearing said selected jewel.

In this way, the representation of the scanned hand is displayed on the screen.

In accordance with one preferred embodiment, said method also comprises the step of correlating said data acquired by way of biometric scanning with the data available in said computer file relevant to shape and dimensions of the jewels.

In this way, a user can immediately verify the rings available in the vending machine which are also appropriate, in terms of shape and size, to be worn by the user herself/himself.

In accordance with one preferred embodiment, the method according to the present invention also comprises the step of buying the selected jewel.

In accordance with one preferred embodiment, said step of buying the selected jewel comprises the steps of inserting a credit card in a special slot available in said jewelry vending machine according to the present invention and of inputting his/her own codes by way of a keyboard, also available in said jewelry vending machine according to the present invention.

Further characteristics and advantages of the present invention will be more apparent in the light of the following detailed description of the preferred, but not exclusive, embodiments, as illustrated for explanatory non-limitative purposes, with reference to the attached drawings, wherein:
- Figure 1 is an axonometric view of a basket used in a jewelry vending machine according to the present invention;
- Figure 2 is a side view wherein four baskets as those depicted in figure 1, overlapped on one another, are shown;
- Figure 3 is a side view showing a spiral device intended for housing jewels;
- Figure 4 is a side view wherein five trays used in a vending machine according to the present invention are shown, wherein the trays are arranged overlapped on one another and each tray houses six spiral devices for housing jewels as depicted in Figure 3;
- Figure 5 is a side view of a special embodiment of the jewelry vending machine, wherein jewel containers arranged on three columns, placed side by side, of a plurality of baskets overlapped on one another and on five trays overlapped on one another, are shown;
- Figure 6 is an overall top view of an embodiment of the vending machine according to the present invention, wherein two modules are visible.

### DETAILED DESCRIPTION.

The following detailed description refers to some particular embodiments of the jewelry vending machine according to the present invention, and its respective distributing method, without limiting their content.

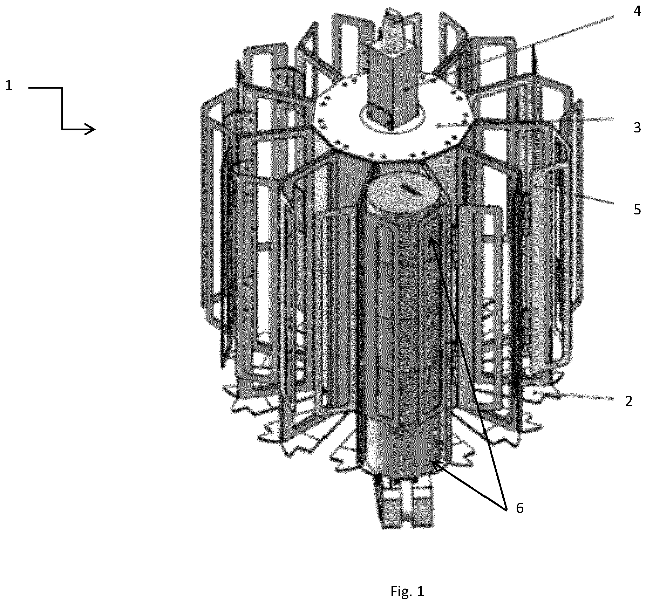

With a specific reference to Figure 1, a rotary basket 1 provided with a lower base plate 2, an upper plate 3, a central pivot 4, and a plurality of substantially cylindric shaped compartments 5 are described. Each compartment 5 is radially arranged around the central pivot 4 and supported by the lower base plate 2. Each of the compartments 5 contains a plurality of vertically-arranged jewel containers 6, overlapped on one another.

In the embodiment shown in Figure 1 there are five jewel containers 6 overlapped on one another in each of the eleven compartments 5, for a total of 55 containers 6 available in the basket 1, but the number of compartments 5 and/or the number of jewel containers 6 for every compartment 5 might also be greater or fewer.

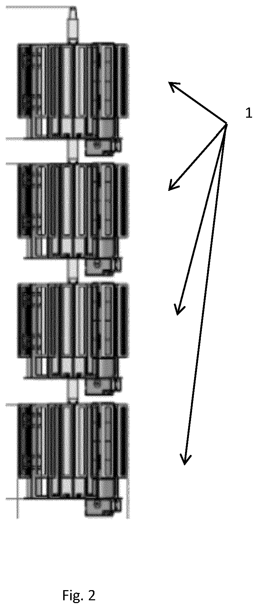

With a specific reference to Figure 2, five rotary basket 1 are shown (each of them identical to that shown in Figure 1) overlapped on one another, so that the upper plate 3 and the lower base plate 2 of each basket 1 separate that basket 1 from the above and below one respectively.

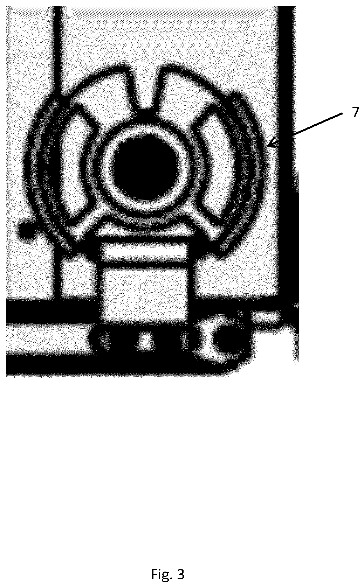

With specific reference to Figure 3, another embodiment of object container formed of a spiral device 7 is shown.

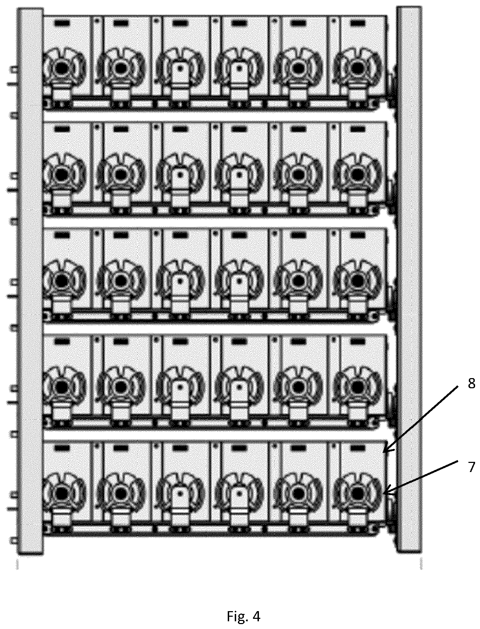

Figure 4 shows an embodiment having five trays 8 overlapped on one another, wherein each tray 8 houses six spiral devices 7 placed side by side to each other, for a total of thirty spiral devices 7.

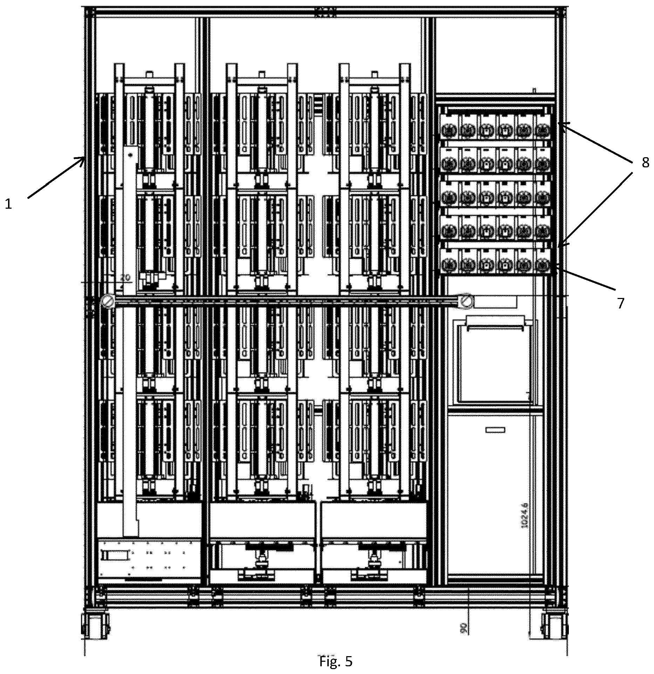

Figure 5 shows a side view of an embodiment of a jewelry vending machine according to the present invention wherein there are, in a first portion, three columns placed side by side, each formed of a plurality of baskets 1 overlapped on one another and, in a second portion, five trays 8 overlapped on one another, each containing inside thereof a plurality of spiral devices 7. In this way, a very high number of object and jewel containers 6 has been provided, thus allowing the user to have at his/her disposal a wide variety of products to select from.

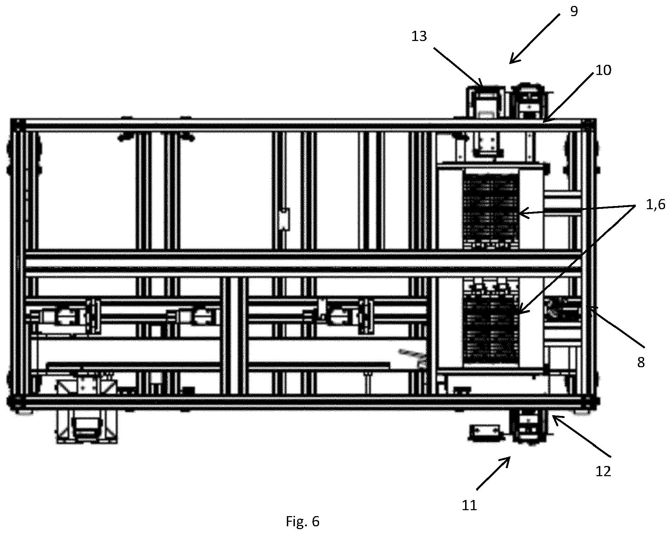

Therefore, with reference to Figure 6, an embodiment of ring vending machine according to the present invention is taken in consideration, provided with a first module 9 formed of a computer file containing images, information, and data relevant to the rings present in the vending machine; a first screen 10 able to show images, information, and data relevant to such rings; a biometric scanning system 13 for scanning a user's hand; a system capable of comparing the data acquired by biometric scanning with the data, available in the computer data file, relevant to shape and dimensions of the selected rings; a plurality of baskets 1 and trays 8, as those shown in Figures 1 and 5, wherein a plurality of ring containers 6 are arranged; first handling means for extracting and distributing to a user the container 6 wherein the ring selected by the user himself/herself is contained.

Operatively, in touch screen mode, the user activates the visualization on the first screen 10 of the image and its respective information of a plurality of jewels such as, for instance, rings, available in the computer file linked to the first screen 10 via a special software. Afterwards, the user selects at least one of the rings displayed on the first screen 10 in order to possibly subsequently buy the ring itself.

Subsequently, a biometric scanning is activated capable of automatically determining the diameter and length of the fingers of a hand of a user intended for wearing the selected ring. The real-dimension image of the hand thus scanned is shown in the first screen 10.

A user's hand rotation determinates a corresponding rotation of the virtual image shown on the first screen 10; in this way, the selected ring can be virtually worn on other fingers of the virtual hand.

Once the virtual test is finished, the method can be repeated until the user decides to buy a determined ring that is of his/her liking and appropriate to the dimensions of his/her fingers. In this way, the test procedure is extremely fast and accurate and can involve as many rings as those contained in the available and numerous containers 6.

Once selected a ring to purchase, a user can purchase it via a direct payment, by inserting a credit card in a special slot available in the jewelry vending machine according to the present invention and inputting his/her own codes by way a keyboard.

Having ascertained the user's credentials to purchase the selected jewel(s), by way of an appropriate software, a first handling means is activated which takes out the container 6 wherein the user's selected jewel is contained; the took-out container 6 is then directed, by way of special guides, towards a delivery zone, easily accessible by the user.

In another embodiment, simultaneously with the above-described first module 9, the vending machine according to the present invention can also be provided with a second module 11 which differs from the first module 9 in that it is provided with its own second screen 12, different from the first screen 10 of the first module 9, and with its own handling means for taking out and delivery of the container 6 inside which another selected jewel is contained.

Also, the second module 11 differentiates from the first module 9 by the fact that it is not provided with the biometric scanning system 13 for scanning a user's hand.

Operatively, the second module 11 can be used for a direct purchase, hence without the virtual test section following the above-described biometric scanning with reference to the first module 9; therefore, on the second screen 12 of the second module 11 images of rings and its respective data are displayed. Consequently, the user selects the rings he/she desires to purchase only on the basis of what the second screen 12 shows.

However, thanks to the fact that the second module 11, in a similar way to the first module 9, also uses the configuration of the plurality of ring containers 6, as shown in Figure 5, the user has at his/her disposal a wide variety of products, amongst which he/she can select which of them purchase, all this making the buying procedure fast and effective.

Obviously, many modifications and variations of the above-described preferred embodiments will be apparent to those skilled in the art, still remaining within the scope of the invention.

Therefore, the present invention is not limited to the above-described preferred embodiments, provided for explanatory non-limitative purposes only, but is defined in the following claims.

## Claims

1. A jewelry vending machine for jewels such as rings, bracelets, and necklaces, formed of at least one first module (9) comprising: a) a computer file containing images, information, and data relevant to said jewels; b) a first screen (10) able to show said images, information, and data relevant to said jewels; c) a plurality of containers (6) each of them being suitable for housing at least one of said jewels, subdivided as a function of jewelry type and dimensions; d) a device that makes it possible for a user to select at least one of said jewels; e) first handling means suitable for taking out the container (6) wherein the selected jewel is housed and suitable for subsequently distributing it to the user; and f) managing means for managing said first means for handling the container (6) wherein the selected jewel is contained,
**characterized in that** at least one of said plurality of containers (6) suitable for housing said jewels is contained in at least one rotary basket (1) provided with a central pivot (4), a lower base plate (2), and a plurality of substantially cylindric shaped compartments (5) radially arranged around said central pivot (4), and supported by said lower base plate (2), wherein each of said substantially cylindric shaped compartments (5) is suitable for housing a plurality of said jewelry containers (6) that are vertically arranged, overlapped on one another.

2. The jewelry vending machine according to claim 1 comprising a plurality of said baskets (1) overlapped on one another.

3. The jewelry vending machine according to any of the previous claims wherein said device that makes it possible for a user to select at least one of said jewels comprises a biometric scanning system (13) capable of automatically determining the diameter and the length of the fingers of a hand and/or of the wrist of a user and a system capable of comparing said data determined by biometric scanning with said data relevant to the jewels available in said computer data file.

4. The jewelry vending machine according to claim 1 wherein at least another of said plurality of containers (6) is formed of a spiral device (7).

5. The jewelry vending machine according to claim 4 comprising a plurality of trays (8) overlapped on one another, wherein each tray (8) is capable of housing a plurality of said spiral devices (7), arranged side by side internally to each tray (8).

6. The jewelry vending machine according to claim 5 comprising at least one first portion formed of a plurality of said baskets (1) overlapped on one another and of at least one second portion formed of a plurality of said trays (8) overlapped on one another, operatively connected to each other.

7. The jewelry vending machine according to claim 1 also comprising a second module (11) comprising i) a second screen (12), different from said first screen (10), able to show said images, information, and data relevant to said jewels; and ii) second handling means, different from said first handling means, suitable for extracting from a corresponding container (6) the jewel selected by a user.

8. The jewelry vending machine according to any of the previous claims also comprising an alert mechanism capable of automatically emitting a signaling perceivable by a user, should one or more jewels in one of said containers (6) be out of stock.

9. A method for automatically distributing jewels such as, for instance, rings, bracelets, and necklaces, contained in special containers (6), the method comprising the following steps:
a) displaying on a panel (10, 12) images, information, and data relevant to said jewels available in a computer file;
b) selecting at least one of said jewels displayed on said panel (10, 12);
c) for each selected jewel, activating a first handling means suitable for extracting the container (6) wherein the selected jewel is housed and of a subsequent conveyance thereof to a delivery zone;
**characterized in that** at least one of said plurality of containers (6) suitable for housing said jewels is contained in at least one rotary basket (1) provided with a central pivot (4), a lower base plate (2), and a plurality of substantially cylindric shaped compartments (5) radially arranged around said central pivot (4) and supported by said lower base plate (2), wherein each of said substantially cylindric shaped compartments (5) is suitable for containing a plurality of said vertically-arranged jewel containers (6), overlapped on one another.

10. The method for automatically distributing jewels according to claim 9, wherein a plurality of said baskets (1) overlapped on another are present.

11. The method for automatically distributing jewels according to claim 9 or 10, wherein said step of selecting at least one of said jewels is performed on the basis of the information acquired by way of a biometric scanning capable of automatically determining the diameter and length of the fingers of a hand and/or of a wrist of a user intended for wearing said selected jewel and on the basis of the correlation between said data acquired by way of biometric scanning and the data available in said computer file relevant to shape and dimensions of the jewels.

12. The method for automatically distributing jewels according to any of claims 9 thru 11 also comprising the step of buying the selected jewel by inserting a credit card in a special slot available in said jewelry vending machine and also by inputting his/her own codes by way of a keyboard.
